# FASCICULE DE BREVET EUROPEEN

(11) **EP 4 386 449 B1**
(45) Date de publication et mention de la délivrance du brevet: **08.04.2026**
(21) Numéro de dépôt: 22306871.9
(22) Date de dépôt: 14.12.2022
(51) Int. Cl.: G01S 17/894, G01B 11/22, G01C 3/08, H04N 25/77, G01S 7/48, G06T 5/00

(54) **OBTENTION D'UNE CARTE DE PROFONDEUR**
HERSTELLUNG EINER TIEFENKARTE
OBTAINING A DEPTH MAP

(43) Date de publication de la demande: 19.06.2024
(73) Titulaire: STMICROELECTRONICS (GRENOBLE 2) SAS, 38000 Grenoble (FR)
(72) Inventeur: TEYSSIER, Jeremie, 38000 GRENOBLE (FR); TUBERT, Cedric, 38120 SAINT-EGREVE (FR); AUGEY, Thibault, 38100 GRENOBLE (FR); BOUCHET, Thomas, 38120 FONTANIL-CORNILLON (FR)
(74) Mandataire: Cabinet Beaumont

(56) Documents cités:
- DE-A1- 102021 101 468
- US-A1- 2014 253 679
- HOEGG THOMAS ET AL: "Time-of-Flight camera based 3D point cloud reconstruction of a car", COMPUTERS IN INDUSTRY, ELSEVIER, AMSTERDAM, NL, vol. 64, no. 9, 31 July 2013 (2013-07-31), pages 1099 - 1114, XP028768005, ISSN: 0166-3615, DOI: 10.1016/J.COMPIND.2013.06.002
- SONG YUNSEOK ET AL: "Time-of-flight image enhancement for depth map generation", 2016 ASIA-PACIFIC SIGNAL AND INFORMATION PROCESSING ASSOCIATION ANNUAL SUMMIT AND CONFERENCE (APSIPA), ASIA PACIFIC SIGNAL AND INFORMATION PROCESSING ASSOCIATION, 13 December 2016 (2016-12-13), pages 1 - 4, XP033044792, DOI: 10.1109/APSIPA.2016.7820774

## Description

### Domaine technique

La présente description concerne de façon générale l'acquisition de carte de profondeur, et, plus particulièrement, un procédé d'obtention d'une carte de profondeur par un capteur de temps de vol indirect (iToF de l'anglais "indirect Time of Flight").

### Technique antérieure

Pour obtenir une carte de profondeur d'une scène à imager, des procédés connus sont basés sur une mesure de temps de vol indirect. Dans ces procédés connus, chaque pixel d'imageur d'une matrice de pixels d'un capteur de temps de vol indirect acquiert des échantillons lors d'une phase d'acquisition de la scène à imager pendant laquelle la scène est illuminée avec un signal lumineux modulé en fréquence. Pour chaque pixel d'imageur, un déphasage entre le signal d'illumination de la scène et le signal réfléchi par la scène et reçu par le pixel est déterminé à partir des échantillons acquis par le pixel, et une distance est déterminée à partir de ce déphasage. La carte de profondeur de la scène, qui comprend une matrice de pixels d'image, est obtenue en associant, à chaque pixel d'image, la distance calculée par le pixel d'imageur correspondant à ce pixel d'image. A titre d'exemple, l'article de Hoegg Thomas et al, intitulé "Time-of-Flight camera based 3D point cloud reconstruction of a car", publié le 31 juillet 2013 dans Computer In Industry, Elsevier, Amerstam, vol. 64, n°9, décrit un procédé de reconstruction d'un nuage de point en trois dimensions à partir d'une acquisition temps de vol. A titre d'autre exemple, la demande de brevet DE 10 2021 101 468 A1 décrit une méthode de génération de données de distance pour un capteur temps de vol.

Toutefois, pour au moins certains pixels d'image de la carte de profondeur, la distance calculée est incohérente avec les distances calculées pour les pixels d'image voisin, par exemple à cause d'une erreur dans le calcul de la distance résultant par exemple d'une erreur dans une étape de dépliement de phase ("phase unwrapping" en anglais) ou à cause de l'intensité du signal lumineux réfléchi reçu par le pixel d'imageur qui est trop faible par rapport à l'intensité de la lumière ambiante. A titre d'exemple, la demande de brevet US 2014/0253679 A1 décrit un procédé d'amélioration d'une carte de profondeur. A titre d'autre exemple, l'article de Song Yunseok et al, intitulé "Time-of-flight image enhancement for depth map generation", publié le 13 décembre 2016 dans Asia-Pacific Signal and Information Processing Association Annual Summit and Conference, décrit une méthode pour améliorer une image temps de vol pour la génération d'une carte de profondeur.

### Résumé de l'invention

Il existe un besoin de pallier tout ou partie des inconvénients des procédés connus d'obtention d'une carte de profondeur par une méthode de mesure de temps vol indirect.

Par exemple, il existe un besoin de détecter, dans une carte de profondeur, des pixels d'images correspondant à des distances calculées incohérentes par rapport aux distances calculées pour des pixels d'image voisins.

Par exemple, il existe un besoin de corriger les distances d'au moins certains des pixels d'image d'une carte de profondeur correspondant à des distances calculées incohérentes.

Par exemple, il existe un besoin de supprimer d'une carte de profondeur des pixels d'image correspondant à des distances calculées incohérentes qui ne sont pas corrigées.

Un mode de réalisation pallie tout ou partie des inconvénients des procédés connus d'obtention d'une carte de profondeur par une méthode de mesure de temps vol indirect.

Par exemple, un mode de réalisation permet de détecter, dans une carte de profondeur, des pixels d'images correspondant à des distances calculées incohérentes par rapport aux distances calculées pour des pixels d'image voisins.

Par exemple, un mode de réalisation permet de corriger les distances d'au moins certains des pixels d'image d'une carte de profondeur correspondant à des distances calculées incohérentes.

Par exemple, un mode de réalisation permet de supprimer d'une carte de profondeur des pixels d'image correspondant à des distances calculées incohérentes qui ne sont pas corrigées.

L'invention prévoit un procédé comprenant les étapes suivantes :
a) pour chaque pixel d'image d'une carte de profondeur obtenue une méthode de temps vol indirect :
   a1) acquérir des échantillons par un pixel d'imageur correspondant et calculer une distance à partir desdits échantillons, et
   a2) définir une fenêtre de N*N pixels d'image avec ledit pixel d'image au centre de ladite fenêtre, N étant un entier impair supérieur ou égal à 3 ;
b) pour chaque fenêtre :
   b1) classer les pixels d'image de la fenêtre dans des groupes, les groupes et le classement des pixels d'image dans les groupes étant déterminés par un seuil de distance et les distances calculées pour les pixels d'image de la fenêtre, chaque groupe (G1, G2, G3, G4) correspondant à une plage de distances (d), et chaque pixel d'image de la fenêtre étant classé dans un groupe si la distance (d_c, d1, d2, d3, d4, d5) calculée pour ledit pixel d'image est comprise dans la plage de distances dudit groupe,
   b2) pour chaque groupe de la fenêtre :
      calculer un nombre de pixels d'image dans ledit groupe, et
      calculer un paramètre de confiance de chaque pixel d'image et un paramètre de confiance du groupe égal à une somme des paramètres de confiance des pixels d'image du groupe, le paramètre de confiance de chaque pixel étant représentatif du rapport signal sur bruit des échantillons acquis à l'étape a1) pour ce pixel d'image, et
   b3) parcourir les pixels d'image de la fenêtre à partir du pixel d'image central en comparant, pour chaque pixel d'image parcouru, le paramètre de confiance du groupe dudit pixel d'image à un premier seuil et le nombre de pixels du groupe dudit pixel à un deuxième seuil, et déterminer si le pixel central est conservé ou remplacé par un autre pixel d'image de la fenêtre ou supprimé de la carte de profondeur sur la base des résultats des comparaisons.

Selon un mode de réalisation, chaque plage de distance a une largeur égale à deux fois le seuil de distance, et la plage de distance du groupe comprenant le pixel central est centrée sur la distance calculée pour le pixel central.

Selon un mode de réalisation, chaque pixel d'imageur appartient à une matrice de pixels d'imageur d'un capteur de temps de vol indirect.

Selon un mode de réalisation, à l'étape a1), l'acquisition des échantillons comprend l'acquisition de premiers échantillons lorsqu'une scène à imager est illuminée par un signal à une première fréquence, et de deuxièmes échantillons lorsque la scène à imager est illuminée par un signal à une deuxième fréquence.

Selon un mode de réalisation, la plus grande des première et deuxième fréquences détermine le seuil de distance.

Selon un mode de réalisation, une distance maximale mesurable sans incertitude avec la plus grande des première et deuxième fréquences détermine le seuil de distance.

Selon un mode de réalisation, le seuil de distance est égal à la moitié de la distance maximale mesurable sans incertitude.

Selon un mode de réalisation, à l'étape a1), le calcul de la distance comprend un dépliement de phase.

Selon un mode de réalisation, à l'étape b3), le parcours des pixels d'image de la fenêtre a une forme de spirale.

Selon un mode de réalisation, le paramètre de confiance de chaque pixel est l'amplitude d'un signal reçu par le pixel d'imageur correspondant lors de l'étape a1) ou cette amplitude au carré divisée par une composante continue du signal reçu.

Selon un mode de réalisation, le premier seuil est déterminé de manière empirique.

Selon un mode de réalisation, le deuxième seuil est déterminé de manière empirique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 illustre, par un organigramme, un exemple de mode de réalisation d'un procédé d'obtention d'une carte de profondeur ;
la figure 2 illustre, de manière plus détaillée, un exemple de mode de réalisation d'une étape du procédé de la figure 1 ;
la figure 3 représente, de manière plus détaillée, un exemple de mode de réalisation d'une étape du procédé de la figure 1 ;
la figure 4 représente, de manière plus détaillée, un exemple de mode de réalisation d'une étape du procédé de la figure 1 ; et
la figure 5 illustre un exemple de détail de mise en œuvre d'une étape du procédé de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les procédés connus d'acquisition d'échantillons par des pixels d'imageur d'un capteur iToF lors d'une phase d'acquisition et de calcul, pour chaque pixel d'imageur, d'une distance à partir des échantillons acquis n'ont pas été détaillés, les modes de réalisation et variantes décrits étant compatibles avec ces procédés d'acquisition et de calcul connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Il est proposé un procédé d'obtention d'une carte de profondeur. Dans ce procédé, une carte de profondeur est obtenue par une méthode de temps de vol indirect, à partir d'échantillons acquis par des pixels d'imageur, chaque pixel d'imageur permettant d'acquérir des échantillons qui permettent de calculer une distance pour un pixel d'image correspondant dans la carte de profondeur. Les pixels d'image de la carte de profondeur sont ensuite traités les uns après les autres pour déterminer, pour chaque pixel d'image, si la distance calculée pour ce pixel d'image est ou non cohérente avec les distances calculées pour les pixels d'image voisins. Le traitement de chaque pixel d'image comprend une définition d'une fenêtre de pixels d'image autour du pixel d'image en cours de traitement, et le classement des pixels d'image de la fenêtre dans des groupes sur la base d'un seuil de distance et des distances calculées pour les pixels d'image de la fenêtre. Puis, les pixels d'image de la fenêtre sont parcourus les uns après les autres en partant du pixel en cour de traitement, c'est-à-dire en partant du pixel central de la fenêtre. Lors du parcours des pixels d'image de la fenêtre, pour chaque pixel, le nombre de pixels du groupe de ce pixel d'image est comparé à un premier seuil et un paramètre du groupe de ce pixel est comparé à un deuxième seuil. Le paramètre de chaque groupe est, par exemple, représentatif du rapport signal sur bruit des pixels du groupe et/ou déterminé par les échantillons acquis par les pixels d'imageur correspondant aux pixels d'image du groupe. En fonction des résultats des comparaisons faites pour chacun des pixels d'image parcouru, le pixel traité, c'est-à-dire le pixel central de la fenêtre, est détecté, ou identifié, comme correspondant à une distance calculée incohérente ou non.

Selon un mode de réalisation, les pixels identifiés comme correspondant à des distances calculées incohérentes sont supprimés de la carte de profondeur, c'est-à-dire, par exemple, que les pixels d'image identifiés comme étant des pixels volants sont identifiés comme tel dans la carte de profondeur.

Selon un autre mode de réalisation, parmi les pixels d'image identifiés comme correspondant à des distances calculées incohérentes, certains sont corrigés et les autres sont supprimés de la carte de profondeur. Chaque correction d'un pixel d'image comprend, par exemple, le remplacement de la distance calculée pour ce pixel d'image par la distance calculée pour un autre pixel d'image de la fenêtre définie autour du pixel d'image corrigé. Ce remplacement est conditionné par les résultats des comparaisons faites pour cet autre pixel d'image.

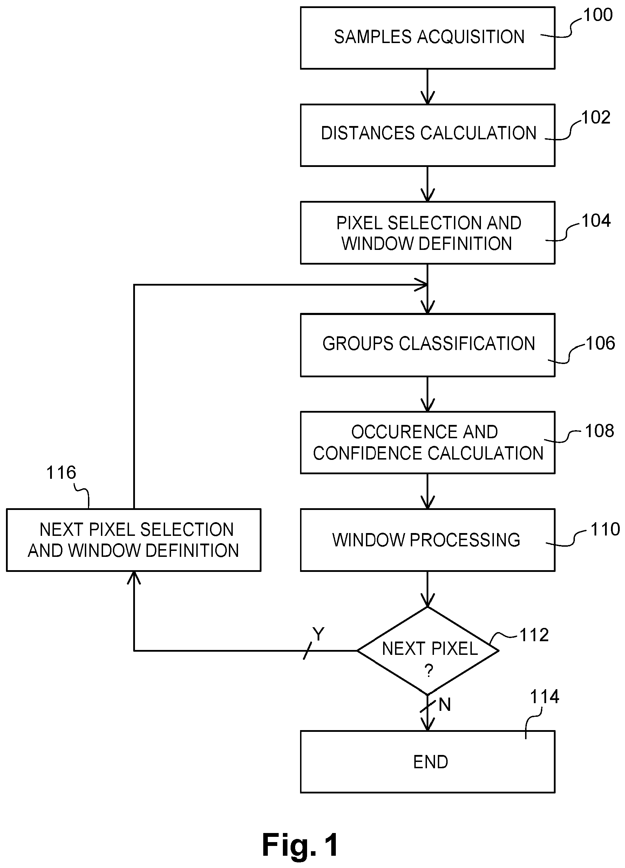

La figure 1 illustre, par un organigramme, un exemple de mode de réalisation d'un tel procédé d'obtention d'une carte de profondeur.

A une étape 100 (bloc "SAMPLES ACQUISITION"), une scène à imager est illuminée avec un signal lumineux modulé en fréquence. Le signal lumineux est réfléchi par la scène à imager, et reçu par les pixels d'imageur d'une matrice de pixel d'un capteur iToF. Chaque pixel d'imageur fait alors l'acquisition d'échantillons à partir desquels il est possible de déterminer un déphasage entre le signal lumineux émis et le signal lumineux réfléchi reçu par le pixel d'imageur, ce déphasage permettant de déterminer une distance entre le pixel d'image et la scène. A titre d'exemple, chaque échantillon acquis par un pixel d'imageur correspond à un échantillon de charge photogénérées dans ce pixel d'imageur.

Selon un mode de réalisation, l'étape d'acquisition des échantillons comprends l'acquisition de premiers échantillons lorsque la scène est illuminée avec un signal modulé à une première fréquence, et l'acquisition de deuxièmes échantillons lorsque la scène est illuminée avec un signal modulé à une deuxième fréquence. L'utilisation de deux fréquences de modulation pour illuminer la scène permet la mise en œuvre d'une étape de dépliement de phase lors du calcule des distances des pixels d'imageur à la scène. Ce dépliement de phase permet de conserver une distance maximale mesurable sans ambiguïté qui est déterminée par la plus faible des fréquences de modulation avec une erreur sur la distance calculée qui est déterminée par la plus grande des fréquences de modulation. En effet, pour une fréquence de modulation donné, les échantillons acquis permettent de déterminer un déphasage modulo 2Π, et l'ambigüité introduite par le modulo 2Π résulte en une ambigüité sur la distance calculée.

Selon une variante de réalisation, l'acquisition des échantillons par les pixels d'imageur est faite lorsque la scène est illuminée avec un signal modulé à une seule fréquence de modulation. Dans ce cas, il n'y a pas de mise en œuvre de dépliement de phase, la distance maximale mesurable et l'erreur sur la distance mesurée, c'est -à-dire calculée à partir des échantillons acquis, est déterminée par cette unique fréquence de modulation.

Une fois les échantillons acquis, à une étape suivante 102 (bloc "DISTANCES CALCULATIONS), pour chaque pixel d'imageur, une distance du pixel à la scène est calculée, cette distance correspondant à un pixel d'image d'une carte de profondeur. Dit autrement, pour chaque pixel d'image de la carte de profondeur, des échantillons sont acquis par un pixel d'imageur correspondant à l'étape 100 et une distance est calculée à partir de ces échantillons à l'étape 102. Ainsi, à la fin de l'étape 102, une carte de profondeur est obtenue. Toutefois, dans cette carte de profondeur, certains pixels d'image correspondent à des distances calculées qui ne sont pas cohérentes avec les distances calculées pour des pixels d'image voisins de ces pixels d'image. Les pixels d'image correspondant à des distances calculées incohérentes sont, par exemple, appelés pixels volants ("flying pixels" en anglais).

A une étape suivante 104 (bloc "PIXEL SELECTION AND WINDOW DEFINITION"), un premier pixel d'image de la carte de profondeur obtenu à l'étape 102 est sélectionné. Ce pixel d'image sélectionné sera ensuite traité lors d'étapes suivantes 106, 108 et 110 décrites ci-dessous pour déterminer ou identifier si ce pixel d'image est un pixel volant correspondant à une distance calculée incohérente (pixel volant) ou si ce pixel d'image correspond à une distance calculée cohérente. Pour cela, à l'étape 104, une fenêtre de N*N pixels d'image est définie autour du pixel d'image sélectionné, de sorte que le pixel d'image sélectionné se retrouve au centre de la fenêtre de N*N pixels d'image, N étant alors un entier impair supérieur ou égal à 3. A titre d'exemple, N est égal à 5.

A une étape suivante 106 (bloc "GROUPS CLASSIFICATION"), les pixels d'image faisant partie de la fenêtre de N*N pixels d'image sont classés dans des groupes. Chaque pixel d'image de la fenêtre de N*N pixels d'image est classé dans le groupe qui correspond à la plage de distances à laquelle appartient la distance calculée pour ce pixel d'image. A titre d'exemple, les plages de distances des différents groupes peuvent se chevaucher, et un pixel de la fenêtre peut alors appartenir à plus d'un groupe. Plus particulièrement, chaque groupe, c'est-à-dire la plage de distances correspondant à ce groupe, est déterminé par les distances calculées pour les pixels d'image de la fenêtre en cour de traitement et par un seuil de distance th_d.

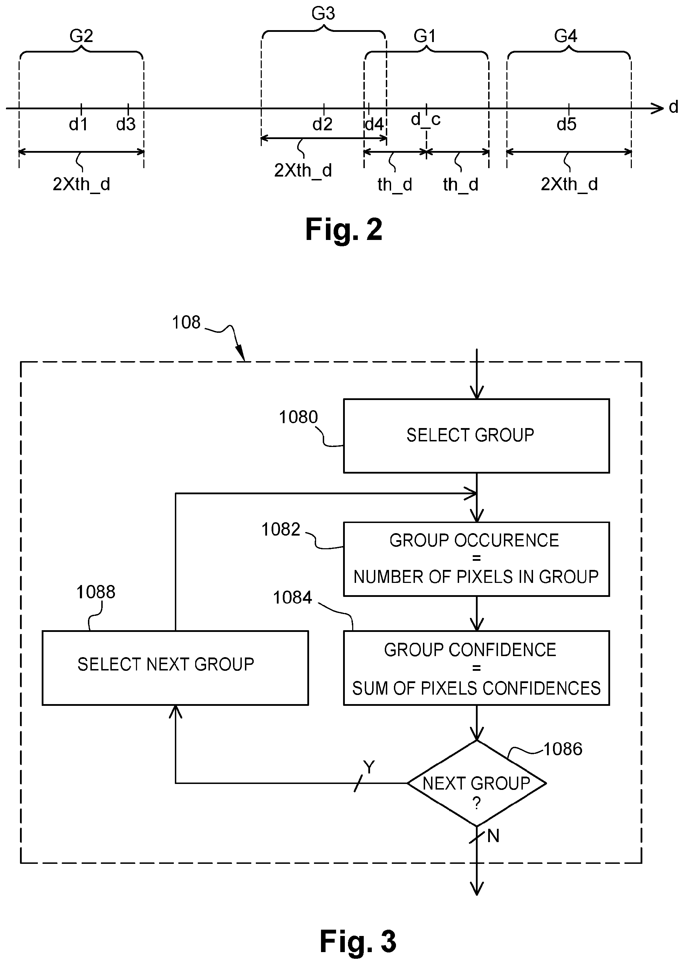

La figure 2 illustre, de manière plus détaillée, un exemple de mode de réalisation de l'étape 106 du procédé de la figure 1, et, plus particulièrement, de la façon dont sont déterminés les groupes, ou, dit autrement, de la façon dont sont déterminées les plages de distances correspondant à ces groupes.

La figure 2 illustre plus particulièrement comment sont déterminés les groupes à partir des distances calculées pour les pixels d'image de la fenêtre de N*N pixels d'image et du seuil th_d, ou, dit autrement, comment sont déterminées les plages de distances d (en abscisse en figure 2) de ces groupes à partir des distances calculées et du seuil th_d.

Un premier pixel de la fenêtre, de préférence le pixel central de la fenêtre, est utilisé pour déterminer le premier groupe (G1 en figure 2). Le groupe G1 correspond à une plage de distances d d'étendue égale à deux fois le seuil d_th et centrée sur la distance calculée correspondant à ce pixel.

Ensuite, successivement pour chaque autre pixel de la fenêtre, on vérifie si la distance correspondant à ce pixel fait partie d'un ou plusieurs groupes Gi existants, avec i un indice entier allant de 1 à M et M un entier correspondant au nombre total de groupes déjà déterminés. Dit autrement, on vérifie, pour chaque groupe Gi, si la distance correspondant à ce pixel appartient à la plage de distance du groupe Gi.

A chaque fois que le pixel appartient à un groupe Gi, le pixel est ajouté à ce groupe, un pixel pouvant faire partie de plusieurs groupes comme cela sera détaillé ci-après.

En revanche, si le pixel n'appartient à aucun des M groupes Gi déjà déterminé, un nouveau groupe Gi est déterminé (M est incrémenté d'une unité), ce nouveau groupe Gi correspondant à une plage de distance d'étendue égale à 2*th_d centrée sur la distance correspondant à ce pixel. La plage de distances d de ce nouveau groupe peut chevaucher au moins en partie une plage de distances d correspondant à un ou plusieurs autres groupes Gi. En outre, le pixel est classé dans ce nouveau groupe.

A titre d'exemple, lors de la détermination des M groupes Gi d'une fenêtre de N*N pixels d'image, les pixels de la fenêtre sont traités (ou parcourus) les uns après les autres, par exemple en commençant par le pixel central de la fenêtre et, par exemple, en suivant un même parcours que celui suivi à une étape 110 de la figure 1 qui sera décrite plus en détail par la suite. Toutefois, dans des exemples alternatifs, le premier pixel de la fenêtre utilisé pour déterminer les M groupes Gi de cette fenêtre peut être n'importe quel autre pixel d'image de la fenêtre de N*N pixels d'image et/ou le sens de parcours de pixels de la fenêtre pour déterminer les M groupes Gi peut être différent du sens de parcours des pixels de la fenêtre utilisé à l'étape 110 du procédé.

Dans l'exemple de la figure 2, le premier pixel de la fenêtre utiliser pour la détermination des M groupes Gi de la fenêtre est le pixel central de la fenêtre, qui correspond à une distance d_c. Ainsi, le premier groupe G1 déterminé correspond à une plage de distances d de longueur égal à 2*th_d centrée sur la distance d_c.

Ensuite, un deuxième pixel de la fenêtre est traité, ce deuxième pixel correspondant à une distance d1. Dans cet exemple, la distance d1 ne fait pas partie de la plage de distances d correspondant au groupe G1, et un groupe G2 est déterminé. Le groupe G2 correspond à une plage de distances d de longueur 2*th_d centrée la distance d1. Le deuxième pixel traité appartient alors au groupe G2. Dans cet exemple, les plages de distances des groupes G1 et G2 ne se chevauchent pas, bien que, dans d'autres exemples, cela aurait pu être le cas.

Ensuite, un troisième pixel de la fenêtre est traité, ce pixel correspondant à une distance d2. Dans cet exemple, la distance d2 n'appartient pas à la plage de distances d correspondant au groupe G1, ni à la plage de distances d correspondant au groupe G2. Ainsi, un troisième groupe G3 est déterminé, ce groupe G3 correspondant à une plage de distances d de longueur égale à 2*th_d centrée sur la distance d2. Le troisième pixel appartient au groupe G3. Dans cet exemple, la plage de distances d correspondant au groupe G3 chevauche partiellement la plage de distances d correspondant au groupe G1, mais pas celle correspondant au groupe G2.

Ensuite, un quatrième pixel de la fenêtre est traité, ce pixel correspondant à une distance d3. Dans cet exemple, la distance d3 appartient à la plage de distances d correspondant au groupe G2, mais n'appartient pas aux plages de distances d correspondant aux groupes G1 et G3. Le quatrième pixel est alors ajouté au groupe G2.

Ensuite, un cinquième pixel de la fenêtre est traité, ce pixel correspondant à une distance d4. Dans cet exemple, la distance d4 appartient à la plage de distances d correspondant au groupe G1 et à la plage de distances d correspondant au groupe G3, mais n'appartient pas à la plage de distances d correspondant au groupe G2. Le quatrième pixel est alors ajouté à chacun des groupes G1 et G3.

Ensuite, un sixième pixel de la fenêtre est traité, ce pixel correspondant à une distance d5. Dans cet exemple, la distance d5 n'appartient à aucune des plages de distances d correspondant aux groupes G1, G2 et G3. Ainsi, un quatrième groupe G4 est déterminé, ce groupe G4 correspondant à une plage de distances d de longueur égale à 2*th_d centrée sur la distance d5. Le sixième pixel appartient au groupe G3. Dans cet exemple, la plage de distances d correspondant au groupe G4 chevauche partiellement la plage de distances d correspondant au groupe G1, mais pas celles correspondant aux groupes G2 et G3.

Bien que cela ne soit pas illustré en figure 2, la détermination des groupes Gi de classement des pixels d'image de la fenêtre de N*N pixels d'image se poursuit jusqu'à ce que tous les pixels de la fenêtre aient été classés dans un ou plusieurs groupes Gi.

On a décrit en relation avec la figure 2 un exemple de mode de réalisation d'un classement, pour chaque fenêtre de N*N pixels d'image, des pixels d'image de la fenêtre dans des groupes Gi déterminés par le seuil th_d et les distances calculées pour chacun des pixels de la fenêtre.

D'autres modes de réalisation de classement, pour chaque fenêtre de N*N pixels d'image, des pixels d'image de la fenêtre dans des groupes Gi déterminés par le seuil th_d et les distances calculées pour chacun des pixels de la fenêtre. Par exemple, on peut prévoir que chaque groupe Gi corresponde à une plage de distance d de largeur égale à deux fois le seuil th_d qui est centrée sur une distance d égale à d_c + j*2*th_d, avec j un entier différent pour chaque groupe. Au moins un groupe Gi correspond au cas où j est nul, et le pixel central est classé dans ce groupe. Les autres groupes Gi, c'est-à-dire les groupes correspondant à des valeurs de j non nulles, sont déterminés de sorte que chaque pixel d'image de la fenêtre de N*N pixels puisse être classé dans un groupe Gi correspondant. Dans un tel exemple, bien que deux groupes Gi puissent avoir des plages de distances contiguës, ces plages de distances ne se chevauchent pas.

Selon un mode de réalisation, lorsque le signal d'illumination utilisé à l'étape 100 de la figure 1 est modulé à une première fréquence puis à une deuxième fréquence, le seuil de distance d_th est déterminé par la plus grande de ces deux fréquences. Plus particulièrement, la plus grande des deux fréquences permet de mesurer ou calculer, sans ambigüité liée au modulo 2Π du déphasage calculé, une distance maximale dmax égale à c/(2*f), avec c la vitesse du signal lumineux et f la valeur de fréquence de la plus grande des première et deuxième fréquences, et le seuil th_d est alors déterminé par cette distance maximale dmax mesurable sans ambigüité ou incertitude. Par exemple, le seuil d_th est égal à dmax/2. Ce mode de réalisation est généralisable à des cas où le signal d'illumination utilisé à l'étape 100 est modulé successivement à plus de deux fréquences différentes. Dans ce cas, la plus grande de ces fréquences, par exemple la distance dmax correspondant à cette fréquence, détermine alors le seuil th_d, le seuil th_d étant, par exemple, égal à dmax/2.

Selon une variante de réalisation, qui s'applique que le signal utilisé à l'étape 100 soit modulé, par exemple successivement, à plusieurs fréquences différences ou que ce signal ne soit modulé qu'à une seule fréquence, le seuil th_d est déterminé par une erreur de mesure maximale visée et/ou de manière empirique. La personne du métier sera en mesure de déterminer ce seuil th_d, par exemple en fonction de ce qui est considéré comme étant une mesure de distance incohérente.

En se référant de nouveau à la figure 1, à une étape suivante 108 (bloc "OCCURRENCE AND CONFIDENCE CALCULATION"), un paramètre de confiance est calculé pour chaque pixel d'image de la fenêtre de N*N pixels d'image, puis un paramètre de confiance de chacun des groupes déterminés à l'étape précédente 106 est déterminé. Pour chaque groupe, le paramètre de confiance du groupe est égal à la somme des paramètres de confiance des pixels d'image appartenant à ce groupe, c'est-à-dire les pixels de la fenêtre de N*N pixels d'image qui ont été classés dans ce groupe à l'étape 106 précédente.

Le paramètre de confiance de chaque pixel d'image est calculé à partir des échantillons acquis par le pixel d'imageur correspondant à l'étape 100. Par exemple, le paramètre de confiance de chaque pixel d'image est représentatif du rapport signal sur bruit du pixel d'imageur correspondant lors de l'étape 100.

En pratique, lors de l'étape 100, chaque pixel d'imageur correspondant à un pixel d'image de la carte de profondeur reçoit un signal comprenant une composante périodique à la fréquence de modulation du signal d'illumination de scène et une composante continue, par exemple au moins en partie déterminée par la lumière ambiante. L'amplitude de la composante périodique et la valeur de la composante continue sont déterminables à partir des échantillons acquis.

A titre d'exemple, le paramètre de confiance de chaque pixel d'image est l'amplitude du signal reçu par le pixel d'imageur correspondant, c'est-à-dire l'amplitude de la composante périodique de ce signal reçu. L'amplitude du signal reçu par un pixel d'imageur est représentative du rapport signal sur bruit des échantillons acquis par ce pixel d'imageur à l'étape 100, du fait que ce rapport signal sur bruit est au moins en partie déterminé par cette amplitude.

A titre d'exemple alternatif, le paramètre de confiance de chaque pixel d'image est égal au carré de l'amplitude du signal reçu par le pixel d'imageur correspondant, c'est-à-dire au carré de l'amplitude de la composante périodique de ce signal reçu, divisé par la valeur de la composante continue de ce signal reçu. Le rapport du carré de l'amplitude du signal reçu par un pixel d'imageur sur la valeur de la composante continue de ce signal reçu est représentatif du rapport signal sur bruit des échantillons acquis par ce pixel d'imageur à l'étape 100, du fait que ce rapport signal sur bruit est au moins en partie déterminé par cette amplitude et par cette composante continue.

A titre d'autre exemple alternatif, le paramètre de confiance de chaque pixel d'image est égal au rapport signal sur bruit des échantillons acquis à l'étape 100 par le pixel d'imageur correspondant à ce pixel d'image, c'est-à-dire au rapport signal sur bruit des échantillons acquis à l'étape 100 pour ce pixel d'image.

Plus généralement, le paramètre de confiance de chaque pixel d'image est, par exemple, au moins en partie déterminé par l'amplitude de la composante périodique du signal réfléchi reçu par le pixel d'imageur correspondant à ce pixel d'image.

A l'étape 108, en plus de calculer le paramètre de confiance de chaque pixel d'image de la fenêtre de N*N pixels d'image et de chaque groupe de pixels d'image déterminé à l'étape 106 précédente, le nombre total de pixels d'image classés dans chaque groupe est calculé. Dit autrement, pour chaque groupe obtenu à l'issu de l'étape 106 précédente, l'étape 108 comprend le calcul du nombre total de pixels d'image classé dans ce groupe.

La figure 3 représente, de manière plus détaillée et sous la forme d'un organigramme, un exemple de mode de réalisation de l'étape 108 du procédé de la figure 1.

Dans ce mode de réalisation, l'étape 108 débute par une étape 1080 (bloc "SELECT GROUP") de sélection d'un des groupes déterminés à l'étape 106 précédente.

A une étape suivante 1082 (bloc "GROUP OCCURRENCE = NUMBER OF PIXLES IN GROUP"), le nombre total de pixels d'image classés, à l'étape 106 de la figure 1, dans le groupe sélectionné.

A une étape suivante 1084 (bloc "GROUP CONFIDENCE = SUM OF PIXELS CONFIDENCES"), le paramètre de confiance du groupe sélectionné est calculé et est égal à la somme des paramètres de confiance des pixels d'image classés dans ce groupe.

A titre d'exemple, le paramètre de confiance de chaque pixel d'image du groupe sélectionné est calculé au début de l'étape 1084, ou lors de l'étape ou ce groupe est sélectionné. A titre d'exemple alternatif, le paramètre de confiance de chaque pixel d'image de la fenêtre de N*N pixels d'image est calculé lors de la mise en œuvre de l'étape 108 précédente, ou de l'étape 106 précédente, ou encore lors d'une autre étape précédant l'étape 108, par exemple lors de l'étape 102 de la figure 1.

A une étape suivante 1086 (bloc "NEXT GROUP?"), un test détermine si il reste un groupe de pixels d'image pour lequel le paramètre de confiance et le nombre total de pixels dans le groupe n'ont pas été calculés.

Si ce n'est pas le cas (sortie N de l'étape 1086), l'étape 108 est terminée.

S'il reste un ou plusieurs groupes de pixels d'image pour lesquels le paramètre de confiance et le nombre total de pixels dans le groupe n'ont pas été calculés, l'étape 1086 est suivie par une étape 1088 (bloc "SELECT NEXT GROUP").

A l'étape 1088, parmi les groupes de pixels d'image déterminés à l'étape 106 précédente (figure 1), un groupe de pixels d'image qui n'a pas encore été sélectionné à l'étape 108 est sélectionné. Dit autrement, à l'étape 1088, un groupe de pixels d'image pour lequel le paramètre de confiance et le nombre total de pixels dans le groupe n'ont pas été calculés est sélectionné.

L'étape 1088 est suivie par la mise en œuvre des étapes 1082, 1084 et 1086, par exemple dans cet ordre dans l'exemple de la figure 3, de sorte à calculer le paramètre de confiance et le nombre total de pixels dans le groupe sélectionné.

Bien que dans l'exemple de la figure 3, l'étape 1084 soit mise en œuvre après l'étape 1082, l'inverse est également possible, voire ces deux étapes 1082 et 1084 peuvent être mises en œuvre simultanément (en parallèle).

Bien que dans l'exemple de la figure 3, le paramètre de confiance de chaque groupe et le nombre total de pixels dans chaque groupe soient calculés de manière séquentielle, c'est-à-dire en sélectionnant les uns après les autres les groupes de pixels d'image déterminés à l'étape 106 précédente de la figure 1, dans d'autres exemples non illustrés, les groupes de pixels sont traités de manière parallèle de sorte que le paramètre de confiance de chacun des groupes soit calculé simultanément pour tous les groupes de pixels, et que le nombre total de pixel par groupe soit calculé simultanément pour tous les groupes de pixels.

En se référant de nouveau à la figure 1, à une étape suivante 110 (bloc "WINDOW PROCESSING"), la détection, ou identification, du fait que le pixel d'image en cours de traitement, c'est-à-dire le pixel d'image centrale de la fenêtre de N*N pixels d'image utilisée lors des étapes suivantes 106 et 108 précédentes, est ou non un pixel volant est mise en œuvre.

Pour cela, les pixels d'image de la fenêtre de N*N pixels d'image sont parcouru les uns après les autres en partant du pixel central de la fenêtre, et en s'éloignant de ce pixel central pour aller vers les pixels d'image sur les bords de la fenêtre. Dit autrement, les pixels d'image sont parcourus en partant du pixel d'image central puis en s'éloignant de plus en plus du pixel central. De préférence, le parcours des pixels d'image de la fenêtre à la forme d'une spirale, et, plus exactement d'une spirale partant du pixel central de la fenêtre ou, dit autrement, d'une spirale enroulée autours du pixel centrale de la fenêtre.

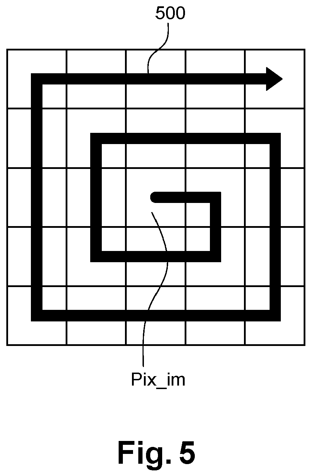

La figure 5 illustre un exemple de détail de mise en œuvre de l'étape 110 du procédé de la figure 1, et plus particulièrement un exemple de mode de réalisation de la façon dont les pixels d'image Pix_im d'une fenêtre de N*N pixels d'image sont parcourus à l'étape 110. Pour ne pas surcharger la figure, seul le pixel d'image central de la fenêtre de N*N pixels est référencé dans cette figure.

Dans cet exemple, N est égal à 5, bien que ce qui est décrit ici s'applique à d'autres valeurs de N impaires et supérieures ou égales à 3.

En figure 5, le parcours des pixels de la fenêtre est représenté par une flèche 500.

Dans l'exemple de la figure 5, les pixels Pix_im de la fenêtre de pixels d'image sont parcouru en suivant une spirale débutant à partir du pixel central de la fenêtre et s'enroulant autour de ce pixel central, dans cet exemple dans le sens horaire bien que le sens anti-horaire soit également possible.

En se référant de nouveau à la figure 1, et, plus particulièrement à l'étape 110 de la figure 1, lors du parcours des pixels d'image de la fenêtre de N*N pixels, pour chaque pixel d'image parcouru dans la fenêtre courante de N*N pixels, deux comparaisons sont mises en œuvre. Plus particulièrement, pour chaque pixel d'image parcouru, une première comparaison consiste à comparer à un seuil TH2 le nombre total de pixels dans le groupe auquel appartient ce pixel d'image, c'est-à-dire le pixel d'image courant de la fenêtre courante de N*N pixels. En outre, pour chaque pixel d'image parcouru, une deuxième comparaison consiste à comparer à un seuil TH1 le paramètre de confiance du groupe auquel appartient ce pixel d'image.

En reprenant l'exemple de la figure 2, le pixel central de la fenêtre courante de N*N pixels d'image appartient au groupe G1 et, pour ce pixel central, la première comparaison consiste à comparer au seuil TH2 le nombre de pixels dans le groupe G1 et la deuxième comparaison consiste à comparer au seul TH1 le paramètre de confiance du groupe G1.

A l'étape 110, en fonction des résultats des première et deuxième comparaisons mises en œuvre pour chaque pixel d'image parcouru dans la fenêtre courante de N*N pixels d'image, il est déterminé si le pixel central de la fenêtre correspond ou non à une distance calculée, ou mesurée, cohérente avec les distances calculées pour les autres pixels d'image de la fenêtre courante. Dans le cas où le pixel d'image central de la fenêtre courant n'est pas identifié comme étant un pixel volant, ce pixel d'image est conservé dans la carte de profondeur.

Selon un mode de réalisation, lorsque le pixel central de la fenêtre courante est identifié comme étant un pixel volant correspondant à une distance mesurée incohérente, ce pixel d'image est supprimé de la carte de profondeur.

Selon un autre mode de réalisation, lorsque le pixel central de la fenêtre courante est identifié comme étant un pixel volant correspondant à une distance mesurée incohérente, sur la base des résultats des première et deuxième comparaisons mises en œuvre pour chaque pixel d'image parcouru dans la fenêtre courante, il est déterminé si ce pixel d'image volant peut être corrigé en le remplaçant par un autre pixel d'image de la fenêtre dans la carte de profondeur, ou si ce pixel d'image volant ne peut pas être corrigé en le remplaçant par un autre pixel d'image de la fenêtre et est alors supprimé de la carte de profondeur.

A titre d'exemple, lorsque le paramètre de confiance du groupe du pixel central de la fenêtre courante est supérieur au seuil TH1 et/ou que le nombre de pixels dans le groupe du pixel central de la fenêtre courante est supérieur au seuil TH2, alors le pixel central n'est pas identifié comme pixel volant. A l'inverse, lorsque le paramètre de confiance du groupe du pixel central de la fenêtre courante est inférieur au seuil TH1 et que le nombre de pixels dans le groupe du pixel central de la fenêtre courante est inférieur au seuil TH2, alors le pixel central est identifié comme pixel volant.

A titre d'exemple, lorsque le pixel central est identifié comme pixel volant, dans un mode de réalisation où l'on essai de corriger le pixel central avant de le supprimer de la carte de profondeur, le pixel central est remplacé, si cela est possible, par un autre pixel de la fenêtre courante pour lequel le paramètre de confiance du groupe de cet autre pixel est supérieur au seuil TH1 et/ou le nombre de pixels dans le groupe de cet autre pixel est supérieur au seuil TH2. De préférence, cet autre pixel de la fenêtre qui remplaçe le pixel central de la fenêtre courant est le premier pixel de la fenêtre courante qui est rencontré lors du parcours de la fenêtre courante pour lequel le paramètre de confiance du groupe de ce pixel est supérieur au seuil TH1 et/ou le nombre de pixels dans le groupe de ce pixel est supérieur au seuil TH2. Lorsqu'il n'y a aucun pixel d'image dans la fenêtre courante pour lequel le paramètre de confiance du groupe de cet autre pixel est supérieur au seuil TH1 et/ou le nombre de pixels dans le groupe de cet autre pixel est supérieur au seuil TH2, alors le pixel central identifié comme pixel volant n'est pas corrigé et est supprimé de la carte de profondeur.

Selon un mode de réalisation, le seuil TH1 est déterminé de manière empirique, la personne du métier étant en mesure de déterminé ce seuil TH1 en fonction de ce qu'elle considère comme étant une mesure de distance incohérente. Dit autrement, le seuil TH1 est déterminé de manière empirique sur la base d'une définition de ce qu'est une distance calculée incohérente.

Selon un mode de réalisation, le seuil TH2 est déterminé de manière empirique, la personne du métier étant en mesure de déterminé ce seuil TH1 en fonction de ce qu'elle considère comme étant une mesure de distance incohérente. Dit autrement, le seuil TH2 est déterminé de manière empirique sur la base d'une définition de ce qu'est une distance calculée incohérente.

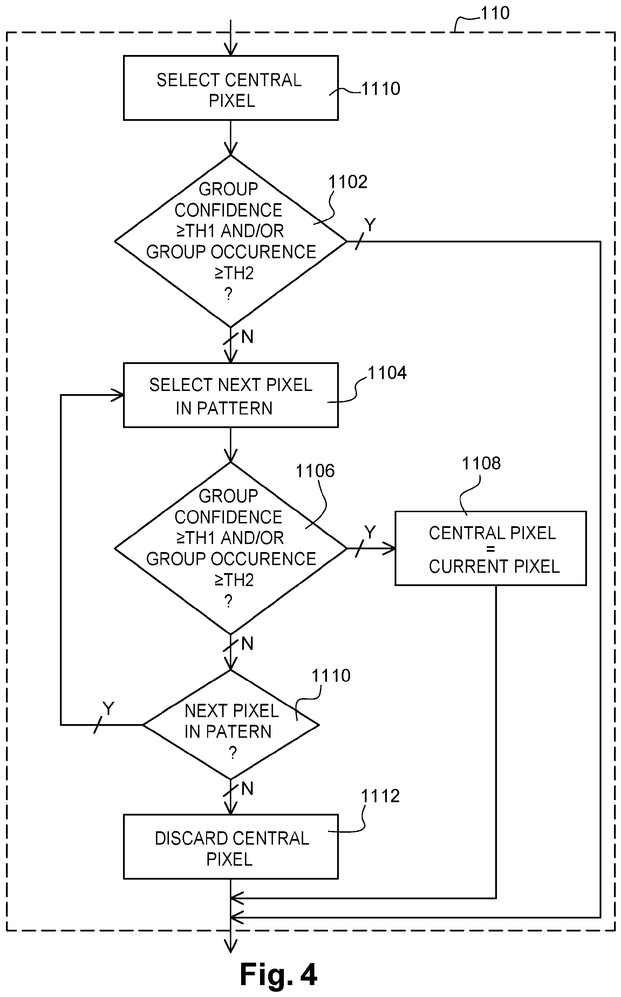

La figure 4 représente, de manière plus détaillée, un exemple de mode de réalisation de l'étape 110 du procédé de la figure 1. Plus particulièrement, la figure 4 représente un exemple de mode de réalisation de l'étape 110 dans laquelle, lorsque le pixel central de la fenêtre courante est identifié comme pixel volant, une correction du pixel central, c'est-à-dire une correction de la distance calculée correspondant à ce pixel central, est mise en œuvre si cela est possible.

L'étape 110 débute par une étape 1100 (bloc "SELECT CENTRAL PIXEL") où un pixel de la fenêtre courante de N*N pixels d'image est sélectionné, ce pixel sélectionné correspondant au pixel central à l'étape 1000.

A une étape suivante 1102 (bloc "GROUP CONFIDENCE ≥ TH1 AND/OR GROUP OCCURRENCE ≥ TH2?"), le paramètre de confiance du groupe auquel appartient le pixel sélectionné, à savoir le pixel central à l'étape 1102, est comparé au seuil TH1, et le nombre de pixel dans ce groupe est comparé au seuil TH2.

Si le paramètre de confiance du groupe est supérieur au seuil TH1 et/ou que le nombre de pixels du groupe est supérieur au seuil TH2 (sortie Y de l'étape 1102), le pixel central est considéré comme n'étant pas un pixel volant. Le pixel central de la fenêtre courante est alors conservé dans la carte de profondeur et l'étape 110 est terminée.

Dans le cas contraire (sortie N de l'étape 1102), dans ce mode de réalisation où l'étape 110 comprend une étape de correction, l'étape 1102 est suivie par une étape 1104 (bloc "SELECT NEXT PIXEL IN PATTERN").

A l'étape 1104, le pixel d'image suivant le pixel sélectionné lorsqu'on parcourt les pixels d'image de la fenêtre courante de N*N pixels, par exemple en suivant le parcours 500 de l'exemple de la figure 5, est sélectionné. Dit autrement, le pixel sélectionné est mis jour avec, ou devient, le pixel d'image suivant dans le parcours des pixels d'image de la fenêtre courante de N*N pixels d'image.

L'étape 1104 est suivie par une étape 1106 (bloc "GROUP CONFIDENCE ≥ TH1 AND/OR GROUP OCCURRENCE ≥ TH2?"), l'étape 1106 est identique à l'étape 1102 à la différence que le pixel sélectionné n'est plus le pixel central comme à l'étape 1102, mais le pixel sélectionné à l'étape 1104 précédente.

Si le paramètre de confiance du groupe auquel appartient le pixel sélectionné est supérieur au seuil TH1 et que le nombre de pixels de ce groupe est supérieur au seuil TH2 (sortie Y de l'étape 1106), l'étape 1106 est suivie par une étape 1108 (bloc "CENTRAL PIXEL = CURRENT PIXEL") lors de laquelle le pixel central de la fenêtre courante est replacé par le pixel sélectionné, ou, dit autrement, la distance calculée pour le pixel central est remplacée par la distance calculée pour le pixel sélectionné, ou pixel courant. La mise en œuvre de l'étape 1108 marque la fin de l'étape 110.

Dans le cas contraire (sortie N de l'étape 1106), l'étape 1106 est suivie par une étape 1110 (bloc "NEXT PIXEL IN PATTERN?") consistant à vérifier s'il reste des pixels dans la fenêtre courante qui n'ont pas été parcourus.

Si c'est le cas (sortie Y de l'étape 1110), l'étape 1110 est suivie de l'étape 1104 décrite précédemment.

Dans le cas contraire (sortie N de l'étape 1110), cela signifie que tous les pixels d'image de la fenêtre courante de N*N pixels ont été parcourus sans avoir trouvé un seul pixel d'image permettant de remplacer le pixel central volant, c'est-à-dire sans avoir pu corriger la distance calculée pour le pixel central par la distance calculée pour un autre pixel d'image de la fenêtre. L'étape 1110 est alors suivie par une étape 1112 (bloc "DISCARD CENTRAL PIXEL") lors de laquelle le pixel central de la fenêtre courante est supprimé de la carte de profondeur. L'étape 1112 marque alors la fin de l'étape 110.

A titre d'exemple, dans un mode de réalisation où l'étape 110 ne comprend aucune étape de correction de la distance du pixel central si celui-ci est identifié comme étant un pixel volant, alors les étapes 1104, 1106, 1108 et 1110 sont omises et la sortie N de l'étape 1102 débouche sur l'étape 1112.

En se référant de nouveau à la figure 1, lorsque l'étape 110 est terminé, le procédé se poursuit à une étape 112 (bloc "NEXT PIXEL?").

A cette étape 112, il est vérifié s'il reste au moins un pixel d'image dans la carte de profondeur obtenue à l'étape 102 qui n'a pas encore fait l'objet d'un traitement comprenant la définition d'une fenêtre de N*N pixels d'image autour de ce pixel et la mise en œuvre des étapes 106, 108 et 110 pour cette fenêtre.

Si c'est le cas (sortie N de l'étape 112), le procédé d'obtention de la carte de profondeur est terminé (étape 114 - bloc "END").

Dans le cas contraire (sortie Y de l'étape 112), l'étape 112 est suivie par une étape 116 (bloc "NEXT PIXEL SELECTION AND WINDOW DEFINTION").

A l'étape 116, un pixel d'image suivant de la carte de profondeur est sélectionné parmi ceux qui n'ont pas encore été sélectionnés pour faire l'objet du traitement comprenant la définition d'une fenêtre correspondante de N*N et la mise en œuvre des étapes 106, 108 et 110 pour cette fenêtre. En outre, à cette étape 116, une nouvelle fenêtre de N*N pixels d'image est définie, cette fenêtre ayant le pixel sélectionné à l'étape 116 comme pixel central et devenant la nouvelle fenêtre courante. L'étape 116 est suivie de l'étape 106 de sorte que les étapes 106, 108 et 110 soient de nouveau mises en œuvre pour cette nouvelle fenêtre courante de N*N pixels d'image.

En figure 1, le paramètre de confiance est calculé de la même façon pour tous les pixels d'image de la carte de profondeur obtenue à l'issue de l'étape 102.

Dans l'exemple de la figure 1, le paramètre de confiance de chaque pixel d'image de la fenêtre de N*N pixels d'image utilisée à chaque mise en œuvre de l'étape 108 est calculé à cette étape 108. Dans des exemples alternatifs, le paramètre de confiance de chaque pixel d'image d'une fenêtre de N*N pixels d'image est calculé lors de la définition de cette fenêtre, à l'étape 104 ou 116. Dans encore d'autres exemples alternatifs, le paramètre de confiance de chaque pixel d'image de la carte de profondeur est calculé à l'étape 100 ou à l'étape 102.

En figure 1, les seuils TH1 et TH2 sont identiques pour chaque mise en œuvre de l'étape 110. Dit autrement, les seuils TH1 et TH2 ne dépendent pas du pixel d'image sélectionné à l'étape 104 ou 116.

De la même façon, le seuil th_d est le même pour chaque mise en œuvre de l'étape 106.

Bien que cela n'ait pas été détaillé, pour les pixels d'image disposés sur les bords de la carte de profondeur, la définition d'une fenêtre de N*N pixels d'image autours de chacun de ces pixels d'image du bord de la carte de profondeur peut comprendre la duplication du pixel central de la fenêtre à chaque emplacement de la fenêtre où la carte de profondeur ne comprend pas de pixels d'image. En variante, les pixels d'image du bord de la carte autours de chacun desquels il n'est pas possible de définir une fenêtre de N*N pixels d'image de la carte de profondeur peuvent simplement ne pas être traité.

La mise en œuvre du procédé de la figure 1 permet d'obtenir, à partir d'une carte de profondeur obtenue à l'issu de l'étape 102, une nouvelle carte de profondeur dans laquelle les pixels d'image volants ont été identifier, ces pixels volants identifiés étant soit supprimés la nouvelle carte de profondeur, soit, dans des modes de réalisation et lorsque cela est possible, remplacés par d'autres pixels d'image de la carte de profondeur.

Selon un mode de réalisation, un compromis préféré entre la rapidité d'exécution du procédé de la figure 1 et la qualité de la correction des pixels d'image identifiés comme étant des pixels volants est obtenu pour N égal à 5.

Divers modes de réalisation et variantes ont été décrits. La personne du métier comprendra que certaines caractéristiques de ces divers modes de réalisation et variantes pourraient être combinées, et d'autres variantes apparaîtront à la personne du métier, l'étendue de la protection restant définie par le jeu de revendications joint.

Enfin, la mise en oeuvre pratique des modes de réalisation et variantes décrits est à la portée de la personne du métier à partir des indications fonctionnelles données ci-dessus. En particulier, comme cela a été indiqué précédemment, la personne du métier sera en mesure de déterminer chacun des seuils th_d, TH1 et TH2 utilisés lors de la mise en œuvre du procédé décrit.

## Revendications

1. Procédé comprenant les étapes suivantes :
a) pour chaque pixel d'image (Pix_im) d'une carte de profondeur obtenue par une méthode de temps vol indirect:
a1) acquérir des échantillons par un pixel d'imageur correspondant (100) et calculer une distance à partir desdits échantillons (102), et
a2) définir une fenêtre de N*N pixels d'image avec ledit pixel d'image au centre de ladite fenêtre (104, 116), N étant un entier impair supérieur ou égal à 3 ;
b) pour chaque fenêtre :
b1) classer les pixels d'image de la fenêtre dans des groupes (106), les groupes (G1, G2, G3, G4) et le classement des pixels d'image dans les groupes étant déterminés par un seuil de distance (th_d) et les distances calculées (d1, d2, d3, d4, d5, d_c) pour les pixels d'image de la fenêtre, chaque groupe (G1, G2, G3, G4) correspondant à une plage de distances (d), et chaque pixel d'image de la fenêtre étant classé dans un groupe si la distance (d_c, d1, d2, d3, d4, d5) calculée pour ledit pixel d'image est comprise dans la plage de distances dudit groupe,
b2) pour chaque groupe de la fenêtre :
calculer un nombre de pixels d'image dans ledit groupe (108, 1082), et
calculer un paramètre de confiance de chaque pixel d'image et un paramètre de confiance du groupe (108, 1084) égal à une somme des paramètres de confiance des pixels d'image du groupe, le paramètre de confiance de chaque pixel étant représentatif du rapport signal sur bruit des échantillons acquis à l'étape a1) pour ce pixel d'image, et
b3) parcourir les pixels d'image de la fenêtre à partir du pixel d'image central (110) en comparant (1102, 1106), pour chaque pixel d'image parcouru, le paramètre de confiance du groupe dudit pixel d'image à un premier seuil (TH1) et le nombre de pixels du groupe dudit pixel à un deuxième seuil (TH2), et déterminer si le pixel central est conservé ou remplacé par un autre pixel d'image de la fenêtre (110, 1108) ou supprimé de la carte de profondeur (110, 1112) sur la base des résultats des comparaisons.

2. Procédé selon la revendication 1, dans lequel chaque plage de distance (d) a une largeur égale à deux fois le seuil de distance (th_d), et la plage de distance du groupe comprenant le pixel central est centrée sur la distance (d_c) calculée pour le pixel central.

3. Procédé selon la revendication 1 ou 2, dans lequel chaque pixel d'imageur appartient à une matrice de pixels d'imageur d'un capteur de temps de vol indirect.

4. Procédé selon la revendication 3, dans lequel, à l'étape a1), l'acquisition des échantillons (100) comprend l'acquisition de premiers échantillons lorsqu'une scène à imager est illuminée par un signal à une première fréquence, et de deuxièmes échantillons lorsque la scène à imager est illuminée par un signal à une deuxième fréquence.

5. Procédé selon la revendication 4, dans lequel la plus grande des première et deuxième fréquences détermine le seuil de distance (th_d).

6. Procédé selon la revendication 3 ou 4, dans lequel une distance maximale mesurable sans incertitude avec la plus grande des première et deuxième fréquences détermine le seuil de distance (th_d).

7. Procédé selon la revendication 6, dans lequel le seuil de distance (th_d) est égal à la moitié de la distance maximale mesurable sans incertitude.

8. Procédé selon l'une quelconque des revendications 4 à 7, dans lequel, à l'étape a1), le calcul de la distance (102) comprend un dépliement de phase.

9. Procédé selon l'une quelconque des revendications 1 à 8, dans lequel, à l'étape b3), le parcours (500) des pixels d'image de la fenêtre a une forme de spirale.

10. Procédé selon l'une quelconque des revendications 1 à 9, dans lequel le paramètre de confiance de chaque pixel est l'amplitude d'un signal reçu par le pixel d'imageur correspondant lors de l'étape a1) ou cette amplitude au carré divisée par une composante continue du signal reçu.

11. Procédé selon l'une quelconque des revendications 1 à 10, dans lequel le premier seuil (TH1) est déterminé de manière empirique.

12. Procédé selon l'une quelconque des revendications 1 à 11, dans lequel le deuxième seuil (TH2) est déterminé de manière empirique.

## Patentansprüche

1. Ein Verfahren, das die folgenden Schritte aufweist:
a) für jedes Bildpixel (Pix_im) einer Tiefenkarte, die mit einem indirekten Laufzeitverfahren gewonnen wurde:
a1) Erfassen von Abtastwerten über ein entsprechendes Bildpixel (100) und Berechnen eines Abstands von den Abtastwerten (102), und
a2) Definieren eines Fensters aus N*N Bildpixeln mit dem Bildpixel in der Mitte des Fensters (104, 116), wobei N eine ungerade ganze Zahl größer oder gleich 3 ist;
b) für jedes Fenster:
b1) Klassifizieren der Bildpixel des Fensters in Gruppen (106), wobei die Gruppen (G1, G2, G3, G4) und die Klassifizierung der Bildpixel in die Gruppen durch einen Abstandschwellenwert (th_d) und die Abstände (d1, d2, d3, d4, d5, d_c) bestimmt werden, die für die Bildpixel des Fensters berechnet werden, wobei jede Gruppe (G1, G2, G3, G4) einem Bereich von Abständen (d) entspricht und jedes Bildpixel des Fensters einer Gruppe zugeordnet wird, wenn der Abstand (d_c, d1, d2, d3, d4, d5), der für das Bildpixel berechnet wurde, in dem Bereich der Abstände der Gruppe liegt,
b2) für jede Gruppe des Fensters:
Berechnen einer Anzahl von Bildpixeln in der Gruppe (108, 1082) und Berechnen eines Konfidenzfaktors jedes Bildpixels und eines Konfidenzfaktors der Gruppe (108, 1084), der gleich der Summe der Konfidenzfaktoren der Bildpixel der Gruppe ist, wobei der Konfidenzfaktor jedes Pixels repräsentativ für das Signal-Rausch-Verhältnis der Abtastwerte ist, die in Schritt a1) für dieses Bildpixel erfasst wurden, und
b3) Scannen der Bildpixel des Fensters ausgehend vom zentralen Bildpixel (110), durch Vergleichen (1102, 1106) für jedes gescannte Bildpixel des Konfidenzfaktors der Gruppe des Bildpixels mit einem ersten Schwellenwert (TH1) und der Anzahl der Pixel der Gruppe des Pixels mit einem zweiten Schwellenwert (TH2), und Bestimmen, ob das zentrale Pixel beibehalten oder durch ein anderes Bildpixel des Fensters ersetzt wird (110, 1108) oder aus der Tiefenkarte verworfen wird (110, 1112), basierend auf den Ergebnissen der Vergleiche.

2. Das Verfahren nach Anspruch 1, wobei jeder Bereich von Abständen (d) eine Breite hat, die doppelt so groß ist wie der Abstandsschwellenwert (th_d), und der Bereich von Abständen der Gruppe, die das zentrale Pixel aufweist, auf den für das zentrale Pixel berechneten Abstand (d_c) zentriert ist.

3. Das Verfahren nach Anspruch 1 oder 2, wobei jedes Bildpixel zu einer Anordnung von Bildpixeln eines indirekten Laufzeit-Sensors gehört.

4. Das Verfahren nach Anspruch 3, wobei in Schritt a1) das Erfassen von Abtastwerten (100) das Erfassen erster Abtastwerte aufweist, wenn eine abzubildende Szene mit einem Signal einer ersten Frequenz bestrahlt wird, und das Erfassen zweiter Abtastwerte, wenn die abzubildende Szene mit einem Signal einer zweiten Frequenz bestrahlt wird.

5. Das Verfahren nach Anspruch 4, wobei die höchste der ersten und zweiten Frequenzen den Abstandschwellenwert (th_d) bestimmt.

6. Das Verfahren nach Anspruch 3 oder 4, wobei ein maximaler Abstand, der ohne Unsicherheit unter Verwendung der höchsten der ersten und zweiten Frequenzen messbar ist, den Abstandsschwellenwert (th_d) bestimmt.

7. Das Verfahren nach Anspruch 6, wobei der Abstandsschwellenwert (th_d) gleich der Hälfte des maximalen Abstands ist, der ohne Unsicherheit messbar ist.

8. Das Verfahren nach einem der Ansprüche 4 bis 7, wobei in Schritt a1) das Berechnen des Abstands (102) ein Phasenentpacken aufweist.

9. Das Verfahren nach einem der Ansprüche 1 bis 8, wobei in Schritt b3) das Abtasten (500) der Bildpixel des Fensters spiralförmig erfolgt.

10. Das Verfahren nach einem der Ansprüche 1 bis 9, wobei der Konfidenzfaktor jedes Bildpixels in der Größenordnung eines Signals ist, das von dem entsprechenden Bildpixel in Schritt a1) empfangen wird, oder diese quadrierte Größenordnung geteilt durch eine Gleichstromkomponente des empfangenen Signals.

11. Das Verfahren nach einem der Ansprüche 1 bis 10, wobei der erste Schwellenwert (TH1) empirisch bestimmt wird.

12. Das Verfahren nach einem der Ansprüche 1 bis 11, wobei der zweite Schwellenwert (TH2) empirisch bestimmt wird.

## Claims

1. A method, comprising the following steps:
a) for each image pixel (Pix_im) of a depth map obtained from an indirect Time of Flight method:
a1) acquiring samples via a corresponding imager pixel (100) and calculating a distance from said samples (102), and
a2) defining a window of N*N image pixels with said image pixel at the center of said window (104, 116), N being an odd integer equal to or higher than 3;
b) for each window:
b1) classifying the image pixels of the window into groups (106), the groups (G1, G2, G3, G4) and the classification of the image pixels into the groups being determined by a distance threshold (th_d) and the distances (d1, d2, d3, d4, d5, d_c) calculated for the image pixels of the window, each group (G1, G2, G3, G4) corresponding to a range of distances (d), and each image pixel of the window being classified into a group if the distance (d_c, d1, d2, d3, d4, d5) calculated for said image pixel is comprised in the range of distances of said group,
b2) for each group of the window:
calculating a number of image pixels in said group (108, 1082), and
calculating a confidence factor of each image pixel and a confidence factor of the group (108, 1084) equal to a sum of the confidence factors of the image pixels of the group, the confidence factor of each pixel being representative of the signal to noise ratio of the samples acquired in step a1) for this image pixel, and
b3) scanning the image pixels of the window from the central image pixel (110) by comparing (1102, 1106), for each scanned image pixel, the confidence factor of the group of said image pixel with a first threshold (TH1) and the number of pixels of the group of said pixel with a second threshold (TH2), and determining whether the central pixel is retained or replaced with another image pixel of the window (110, 1108), or discarded from the depth map (110, 1112) on the basis of the results of the comparisons.

2. The method according to claim 1, wherein each range of distances (d) has a width equal to twice the distance threshold (th_d), and the range of distances of the group comprising the central pixel is centered on the distance (d_c) calculated for the central pixel.

3. The method according to claim 1 or 2, wherein each imager pixel belongs to an array of imager pixels of an indirect time of flight sensor.

4. The method according to claim 3, wherein in step a1), acquiring samples (100) comprises acquiring first samples when a scene to be imaged is irradiated by a signal at a first frequency, and second samples when the scene to be imaged is irradiated by a signal at a second frequency.

5. The method according to claim 4, wherein the highest of the first and second frequencies determines the distance threshold (th_d).

6. The method according to claim 3 or 4, wherein a maximum distance measurable without uncertainty using the highest of the first and second frequencies determines the distance threshold (th_d).

7. The method according to claim 6, wherein the distance threshold (th_d) is equal to half the maximum distance measurable without uncertainty.

8. The method according to any of claims 4 to 7, wherein in step a1), calculating the distance (102) comprises a phase unwrapping.

9. The method according to any of claims 1 to 8, wherein in step b3), the scanning (500) of the image pixels of the window is spiral-shaped.

10. The method according to any of claims 1 to 9, wherein the confidence factor of each image pixel is the magnitude of a signal received by the corresponding imager pixel in step a1), or this squared magnitude divided by a dc component of the received signal.

11. The method according to any of claims 1 to 10, wherein the first threshold (TH1) is empirically determined.

12. The method according to any of claims 1 to 11, wherein the second threshold (TH2) is empirically determined.
